# EUROPÄISCHE PATENTSCHRIFT

(11) **EP 4 211 739 B1**
(45) Veröffentlichungstag und Bekanntmachung des Hinweises auf die Patenterteilung: **25.06.2025**
(21) Anmeldenummer: 21765902.8
(22) Anmeldetag: 19.08.2021
(51) Int. Cl.: H01M 10/0585, H01M 50/204, H01M 50/249, H01M 50/289, H01M 50/293

(54) **ELEKTRISCHER ENERGIESPEICHER MIT WENIGSTENS EINEM ELEKTRODENSTAPEL UND EINER DRUCKKOMPENSATIONSEINRICHTUNG, SOWIE VERFAHREN**
ELECTRICAL ENERGY STORE HAVING AT LEAST ONE ELECTRODE STACK AND A PRESSURE COMPENSATION DEVICE, AND METHOD
ACCUMULATEUR D'ÉNERGIE ÉLECTRIQUE COMPORTANT AU MOINS UN EMPILEMENT D'ÉLECTRODES ET UN DISPOSITIF DE COMPENSATION DE PRESSION, ET PROCÉDÉ

(30) Priorität: 11.09.2020 DE 102020005583
(43) Veröffentlichungstag der Anmeldung: 19.07.2023
(73) Patentinhaber: Mercedes-Benz Group AG, 70372 Stuttgart (DE)
(72) Erfinder: KAUFMANN, Rainer, 70597 Stuttgart (DE); MEINTSCHEL, Jens, 02994 Bernsdorf (DE)
(74) Vertreter: Novagraaf Group
(86) Internationale Anmeldenummer: PCT/EP2021/073038
(87) Internationale Veröffentlichungsnummer: WO 2022/053281

(56) Entgegenhaltungen:
- WO-A1-2015/141631
- WO-A1-2020/094364
- US-A1- 2011 159 352
- US-A1- 2018 175 340
- US-A1- 2020 168 959

## Beschreibung

Die Erfindung betrifft einen elektrischen Energiespeicher mit wenigstens einem Elektrodenstapel gemäß dem Oberbegriff von Patentanspruch 1. Ferner betrifft die Erfindung ein Verfahren zum Betreiben eines elektrischen Energiespeichers.

Hochvolt-Batterien, zum Beispiel für Kraftfahrzeuge, beispielsweise teilweise elektrisch betriebene Kraftfahrzeuge, oder für Stationäranwendungen, beispielsweise für Stromversorger oder Stromspeicher, sind aus einer Vielzahl von in Reihe und/oder parallel geschalteten Einzelzellen gebildet. Innerhalb einer Batterie sind die Einzelzellen beispielsweise als "Hardcasezellen" oder als "Pouchzellen" ausgebildet und in der Regel in sogenannten Zellblöcken zusammengefasst, die jeweils eine bestimmte Anzahl von Zellen inklusive der Einrichtungen zu deren mechanischer Fixierung, zur Kontaktierung und gegebenenfalls zur Temperierung, beispielsweise eine Kühlung oder Heizung, enthalten. Der oder die Zellblöcke sind wiederum in einem geschlossenen Batteriegehäuse untergebracht, welches zusätzlich die nötigen Einrichtungen zur elektrischen Steuerung und Absicherung der Batterie, beispielsweise ein so genanntes Batteriemanagementsystem, sowie die Anschlüsse nach außen, beispielsweise Strom Zu- und Ableitung enthält. Die mechanische Fixierung der nebeneinander aufgestapelten Zellen zur Bildung eines Zellblocks erfolgt im Allgemeinen durch Verpressung und Verklebung, wobei die axialen Verpresskräfte über an den Stirnseiten des Zellblocks angeordnete Druckplatten aufgebracht werden, die wiederum über am Block seitlich vorbeilaufende durchgehende Spannmittel, beispielsweise Verbindungsleisten, Zuganker, Gewindestangen, Spannbänder, miteinander verbunden sind. Der elektrochemisch aktive Teil der Zelle ist der Elektrodenstapel beziehungsweise -flachwickel, der durch Lagen aus Kathoden- und Anodenfolien gebildet wird, die jeweils durch Lagen aus Separatoren getrennt werden. Der Elektrodenstapel wird zur Sicherstellung der Funktion im Betrieb senkrecht zu den Lagen mit einer bestimmten Vorspannkraft verpresst.

Das im Inneren der Zellen befindliche elektrochemisch aktive Elektrodenmaterial ändert seine Dicke über dem Ladungszustand, den so genannten State of Charge (SOC) und der Lebensdauer, dem so genannten State of Health (SOH). Hierbei können Dickenänderungen von insgesamt bis zu 20 Prozent entstehen, welche dann wiederum abgefangen werden müssen. Aktuell werden hierbei elastische Federelemente in und/oder zwischen den Zellen angeordnet. Nachteilig ist hier, dass durch die Federkennlinie ein prinzipbedingtes Ansteigen der Presskraft bei sich ausdehnenden Elektroden beziehungsweise Zellen zu verzeichnen ist, so dass die Zelle oder der Zellblock auf sehr hohe axiale Kräfte ausgelegt werden muss.

US 2018/175 340 A1 offenbart eine beispielhafte Batterieträgeranordnung umfassend eine Blasenvorrichtung mit einer Tasche, die mindestens eine Batteriezelle einer Antriebsbatterie aufnimmt. Die Blase bietet einen Fluidströmungsweg, der an einem Ende der Tasche in einen ersten Abschnitt auf einer ersten Seite der Tasche und einen zweiten Abschnitt auf einer gegenüberliegenden zweiten Seite der Tasche mündet. Ein beispielhaftes Verfahren zur Unterstützung der Batterie umfasst das Bewegen eines Flüssigkeitsstroms entlang eines Flüssigkeitsstrompfads in Richtung mindestens einer Batteriezelle und das Ableiten des Stroms in einen ersten oder zweiten Abschnitt des Flüssigkeitsstrompfads, so dass sich der Strom entlang gegenüberliegender Seiten der mindestens einen Batteriezelle bewegt.

WO 2015/141 631 A1 offenbart eine Druckbeaufschlagungsvorrichtung mit einem Gehäuse, das eine Vielzahl von Batteriezellen aufnimmt; und einer Vielzahl von Abstandshaltern, die an dem Gehäuse in gleichmäßigen Abständen in der Dickenrichtung befestigt sind und Beutelformen bilden, die sich in Übereinstimmung mit dem Luftdruck ausdehnen und zusammenziehen können. Wenn sich die Abstandshalter in einem zusammengezogenen Zustand befinden, wird zwischen benachbarten Abstandshaltern ein größerer Spalt als die Abmessungen der Batteriezellen in der Dickenrichtung aufrechterhalten. Benachbarte Abstandshalter setzen die Batteriezellen in der Dickenrichtung unter Druck, und zwar in einem Zustand, in dem eine Luftvorrichtung den Luftdruck innerhalb der Abstandshalter erhöht und die Abstandshalter ausgedehnt hat.

US 2020/168 959 A1 beschreibt Vorrichtungen und Verfahren, die für das Druckmanagement in elektrochemischen Geräten nützlich sind.

US 2011/159 352 A1 offenbart eine modulare Batterie umfassend ein Gehäuse, eine erste Batteriezelle mit einer ersten Elektrodenoberfläche, eine zweite Batteriezelle mit einer zweiten Elektrodenoberfläche und eine unter Druck setzbare Blase, die die erste Batteriezelle gegen die zweite Batteriezelle drückt.

Aufgabe der vorliegenden Erfindung ist es, einen elektrischen Energiespeicher sowie ein Verfahren zu schaffen, mittels welchen einer Ausdehnung des Elektrodenstapels verbessert kompensiert werden kann.

Diese Aufgabe wird durch einen elektrischen Energiespeicher sowie durch ein Verfahren gemäß den unabhängigen Patentansprüchen gelöst. Vorteilhafte Ausgestaltungsformen sind in den Unteransprüchen angegeben.

Ein Aspekt der Erfindung betrifft einen elektrischen Energiespeicher mit wenigstens einem Elektrodenstapel, welcher eine Mehrzahl von in einer Stapelrichtung übereinander angeordneten Lagen von Elektroden und zwischen den Elektroden angeordneten Separatoren umfasst, mit wenigstens einer Druckkompensationseinrichtung zum Ausüben eines entgegen der Stapelrichtung wirkenden Drucks auf den wenigstens einen Elektrodenstapel, wobei der wenigstens eine Elektrodenstapel und die wenigstens eine Druckkompensationseinrichtung in einem Gehäuse des elektrischen Energiespeichers angeordnet sind.

Es ist vorgesehen, dass der elektrische Energiespeicher eine elektronische Recheneinrichtung zum Ansteuern der wenigstens einen Druckkompensationseinrichtung aufweist, welche dazu ausgebildet ist, in Abhängigkeit von einer jeweiligen Dicke des wenigstens einen Elektrodenstapels einen Druck mit einer im Wesentlichen konstanten Kraft auf den Elektrodenstapel auszuüben, wobei die Druckkompensationseinrichtung als schlauchartige Luftfeder ausgebildet ist.

Insbesondere ist somit vorgesehen, dass die schlauchartige Luftfeder zur Kompensation von Dickenänderung aus beispielsweise einem dünnen und elastischen Kunststoff ausgebildet ist und die Radialkraft durch die Umgebung, das heißt auf der Fläche durch die Elektrodenstapel seitlich durch das ohnehin vorhandene und hinreichend stabile Gehäuse abzustützen. Insbesondere folgt dabei die Erfindung dem Prinzip eines Fahrradschlauchs. Die Baugröße beziehungsweise Blocklänge entspricht dabei einer zweifachen Wandstärke und der Aufwand dieser so genannten Schlauchfeder ist gering, sodass diese ohne weiteres nach jeder Zelle beziehungsweise Elektrode beziehungsweise Elektrodenstapel beziehungsweise Elektrodenpärchen angeordnet werden kann, sodass sich die Elektroden beziehungsweise Elektrodenstapel bei einer Dickenänderung nicht in der Batterie oder in dem Zellblock axial verschieben, wodurch die mechanische, thermische und elektrische Anbringung deutlich vereinfacht wird.

Ferner ist vorgesehen, dass der elektrische Energiespeicher zumindest einen zweiten Elektrodenstapel und einen dritten Elektrodenstapel aufweist und die schlauchartige Luftfeder mäanderförmig zwischen den Elektrodenstapeln angeordnet ist. Somit ist es ermöglicht, dass beispielsweise mittels einer einzigen Druckerzeugungseinrichtung der Druck zwischen den jeweiligen Elektrodenstapeln reguliert werden kann. Somit können auf einfache Weise bei drei Elektrodenstapeln die entsprechenden Dickenänderungen kompensiert werden.

Gemäß einer vorteilhaften Ausgestaltungsform ist die schlauchartige Luftfeder an zumindest dem Elektrodenstapel und/oder an einer Gehäusewand des Gehäuses des elektrischen Energiespeichers abgestützt. Insbesondere kontaktiert somit die schlauchartige Luftfeder den Elektrodenstapel und/oder die Gehäusewand. Dadurch ist es ermöglicht, dass der entsprechende Druck mit der konstanten Kraft auf den Elektrodenstapel ausgeübt werden kann. Somit kann auf einfache Art und Weise eine Dickenänderung des Elektrodenstapels kompensiert werden.

Weiterhin vorteilhaft ist, wenn der elektrische Energiespeicher zumindest einen zweiten Elektrodenstapel aufweist und die schlauchartige Luftfeder zwischen den beiden Elektrodenstapeln angeordnet ist. Somit ist es ermöglicht, dass entsprechende Dickenänderungen von zwei Elektrodenstapeln mittels der schlauchartigen Luftfeder kompensiert werden können.

In einer weiteren vorteilhaften Ausgestaltungsform ist die schlauchartige Luftfeder umgeschlagen zwischen dem Elektrodenstapel und dem Gehäuse und/oder einem weiteren Elektrodenstapel angeordnet. Mit anderen Worten ist vorgesehen, dass zwischen mehreren Elektrodenstapeln und/oder dem Gehäuse eine einzige schlauchartige Luftfeder eingesetzt wird, welche von einer Seite her zwischen den jeweiligen Elektrodenstapeln beziehungsweise Gehäuse geführt und umgeschlagen wird. Somit kann mittels einer einzigen schlauchartigen Luftfeder eine Vielzahl von Elektrodenstapeln beziehungsweise am Gehäuse abgestützt entsprechenden Dickenänderungen kompensiert werden.

Gemäß einer weiteren vorteilhaften Ausgestaltungsform ist die schlauchartige Luftfeder mittels einer außerhalb des Gehäuses ausgebildeten Druckerzeugungseinrichtung der Druckkompensationseinrichtung pneumatisch kontaktiert. Hierzu kann die Druckerzeugungseinrichtung beispielsweise ein Druckregelventil mit einer Entlastungsöffnung, einen Speicherkessel sowie den elektrisch angetriebenen Kompressor aufweisen. Würde beispielsweise das Kraftfahrzeug, in welchem der elektrische Energiespeicher angeordnet sein kann, nicht über eine entsprechende Pneumatik verfügen, so kann die Druckerzeugungseinrichtung separat am elektrischen Energiespeicher ausgebildet sein. Sollte das Kraftfahrzeug über eine entsprechende Druckerzeugungseinrichtung für beispielsweise eine weitere Funktionseinheit des Kraftfahrzeugs verfügen, so kann diese genutzt werden, um die schlauchartige Luftfeder zu betreiben.

Ebenfalls vorteilhaft ist, wenn der Elektrodenstapel als Pouchzelle und/oder als prismatische Zelle ausgebildet ist und/oder die schlauchartige Luftfeder in einem Innenraum der prismatischen Zelle ausgebildet ist. Somit kann sowohl bei der Pouchzelle als auch bei einer prismatischen Zelle eine entsprechende Ausdehnung abgefangen werden. Insbesondere kann bei der prismatischen Zelle, welche auch als Hardcase-Zelle bezeichnet werden kann, die schlauchartige Luftfeder im Innenraum der prismatischen Zelle ausgebildet sein, sodass die schlauchartige Luftfeder an einem Gehäuse der prismatischen Zelle abgestützt ist.

Ferner hat es sich als vorteilhaft erwiesen, wenn die schlauchartige Luftfeder aus einem elastischen Kunststoff und/oder aus Gummi ausgebildet ist. Beispielsweise kann die elastische Umhüllung der schlauchartigen Luftfeder aus Kunststoff, beispielsweise aus Butylgummi, Latex oder Thermoplast ausgebildet sein, wodurch keine zusätzliche elektrische Isolation nötig ist. Die Wandstärke des Umhüllungsmaterials liegt beispielsweise bei 0,1 Millimeter, typisch für Thermoplast, beziehungsweise 0,3 Millimeter, welches insbesondere für Butyl beziehungsweise Latex typisch ist, wodurch sich unabhängig vom Federweg Blocklängen im Bereich von 0,2 bis 0,6 Millimeter ergeben.

Gemäß einer weiteren vorteilhaften Ausgestaltungsform weist der elektrische Energiespeicher eine Vielzahl von schlauchartigen Luftfedern auf und/oder die Vielzahl von schlauchartigen Luftfedern ist über eine Verbindungseinrichtung miteinander pneumatisch verbunden. Dadurch ist es ermöglicht, dass beispielsweise mittels einer einzigen Druckerzeugungseinrichtung dennoch eine Vielzahl von schlauchartigen Luftfedern zwischen beispielsweise den Elektrodenstapeln angeordnet werden kann und diese einfach betrieben werden können. Somit kann bauteilreduziert eine Dickenänderung kompensiert werden.

Ein weiterer Aspekt der Erfindung betrifft ein Kraftfahrzeug mit einem elektrischen Energiespeicher gemäß dem vorhergehenden Aspekt. Das Kraftfahrzeug ist insbesondere als zumindest teilweise elektrisch betriebenes Kraftfahrzeug, insbesondere als vollelektrisch betriebenes Kraftfahrzeug, ausgebildet.

Ein nochmals weiterer Aspekt der Erfindung betrifft ein Verfahren zum Betreiben eines elektrischen Energiespeichers mit wenigstens einem Elektrodenstapel, welcher eine Mehrzahl von in einer Stapelrichtung übereinander angeordneten Lagen von Elektroden und zwischen den Elektroden angeordneten Separatoren umfasst, bei welchem mit wenigstens einer Druckkompensationseinrichtung ein entgegen der Stapelrichtung wirkenden Druck auf den wenigstens einen Elektrodenstapel ausgeübt wird, wobei der wenigstens eine Elektrodenstapel und die wenigstens eine Druckkompensationseinrichtung in einem Gehäuse des elektrischen Energiespeichers bereitgestellt werden.

Es ist dabei vorgesehen, dass der elektrische Energiespeicher eine elektronische Recheneinrichtung aufweist, mittels welcher die wenigstens eine Druckkompensationseinrichtung angesteuert wird und hierbei in Abhängigkeit von einer jeweiligen Dicke des wenigstens einen Elektrodenstapels ein Druck mit einer im Wesentlichen konstanten Kraft auf den Elektrodenstapel ausgeübt wird, wobei die Druckkompensationseinrichtung als schlauchartige Luftfeder bereitgestellt wird.

Vorteilhafte Ausgestaltungsformen des elektrischen Energiespeichers sind als vorteilhafte Ausgestaltungsformen des Kraftfahrzeugs sowie des Verfahrens anzusehen. Der elektrische Energiespeicher sowie das Kraftfahrzeug weisen dazu gegenständliche Merkmale auf, welche eine Durchführung des Verfahrens oder eine vorteilhafte Ausgestaltungsform davon ermöglichen.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: eine schematische Seitenansicht einer Ausführungsform eines elektrischen Energiespeichers;
- Fig. 2: eine weitere schematische Seitenansicht einer Ausführungsform eines elektrischen Energiespeichers;
- Fig. 3: eine nochmals weitere schematische Seitenansicht einer Ausführungsform eines elektrischen Energiespeichers;
- Fig. 4: eine nochmals weitere schematische Seitenansicht einer Ausführungsform eines elektrischen Energiespeichers;
- Fig. 5: eine nochmals weitere schematische Seitenansicht einer Ausführungsform eines elektrischen Energiespeichers;
- Fig. 6: eine weitere schematische Seitenansicht einer Ausführungsform eines elektrischen Energiespeichers;
- Fig. 7: eine nochmals weitere schematische Seitenansicht einer Ausführungsform eines elektrischen Energiespeichers;
- Fig. 8: eine schematische Explosionsdarstellung einer Ausführungsform des elektrischen Energiespeichers gemäß Fig. 4;
- Fig. 9: eine weitere schematische Perspektivansicht einer Ausführungsform des elektrischen Energiespeichers gemäß Fig. 4 und Fig. 8;
- Fig. 10: eine nochmals weitere schematische Perspektivansicht einer Ausführungsform des elektrischen Energiespeichers gemäß Fig. 4, Fig. 8 und Fig. 9;
- Fig. 11: zwei Ansichten des elektrischen Energiespeichers in einer verbauten Form;
- Fig. 12: eine schematische Explosionsdarstellung einer Ausführungsform des elektrischen Energiespeichers gemäß Fig. 5;
- Fig. 13: eine weitere schematische Perspektivansicht einer Ausführungsform des elektrischen Energiespeichers gemäß Fig. 5 und Fig. 12;
- Fig. 14: eine schematische Draufsicht auf eine Ausführungsform des elektrischen Energiespeichers gemäß Fig. 5, Fig. 12 und Fig. 13;
- Fig. 15: eine weitere Explosionsdarstellung einer weiteren Ausführungsform des elektrischen Energiespeichers gemäß Fig. 6;
- Fig. 16: eine weitere Perspektivansicht einer Ausführungsform des elektrischen Energiespeichers gemäß Fig. 6 und Fig. 15;
- Fig. 17: eine schematische Draufsicht auf eine Ausführungsform des elektrischen Energiespeichers gemäß Fig. 6, Fig. 15 und Fig. 16;
- Fig. 18: ein schematisches Schaltbild einer Ausführungsform des elektrischen Energiespeichers; und
- Fig. 19: ein weiteres schematisches Blockschaltbild einer Ausführungsform des elektrischen Energiespeichers.

In den Fig. sind gleiche oder funktionsgleiche Elemente mit gleichen Bezugszeichen versehen.

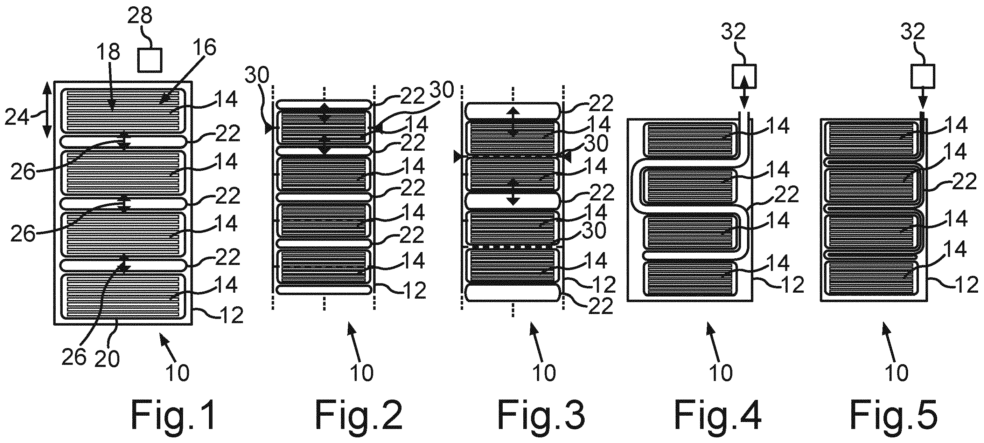

Fig. 1 zeigt in einer schematischen Seitenansicht eine Ausführungsform eines elektrischen Energiespeichers 10. Der elektrische Energiespeicher 10 weist ein Gehäuse 12 auf. In einem Innenraum des Gehäuses 12 ist vorliegend ein Elektrodenstapel 14 mit einer Vielzahl von Elektroden 16 und Separatoren 18 ausgebildet. Im folgenden Ausführungsbeispiel weist der elektrische Energiespeicher 10 vier Elektrodenstapel 14 auf. Im folgenden Ausführungsbeispiel sind die Elektrodenstapel 14 insbesondere als Hardcasezellen, insbesondere als so genannte prismatische Zellen 20 ausgebildet und weisen ein eigenes Gehäuse auf. Insbesondere ist zwischen den jeweiligen Elektrodenstapeln 14 eine schlauchartige Luftfeder 22 ausgebildet.

Die Fig. 1 zeigt insbesondere, dass der elektrische Energiespeicher 10 zumindest einen Elektrodenstapel 14 aufweist, welcher eine Mehrzahl von in einer Stapelrichtung 24 aneinander angeordnete Lagen von Elektroden 16 und zwischen den Elektroden 16 angeordneten Separatoren 18 umfasst, mit wenigstens einer Druckkompensationseinrichtung zum Ausüben eines entgegen der Stapelrichtung 24 wirkenden Drucks 26 auf den wenigstens einen Elektrodenstapel 14, wobei der wenigstens eine Elektrodenstapel 14 und die wenigstens eine Druckkompensationseinrichtung in dem Gehäuse 12 des elektrischen Energiespeichers 10 angeordnet sind.

Es ist dabei vorgesehen, dass der elektrische Energiespeicher 10 eine elektronische Recheneinrichtung 28 zum Ansteuern der wenigstens einen Druckkompensationseinrichtung aufweist, welche dazu ausgebildet ist, in Abhängigkeit von einer jeweiligen Dicke des wenigstens einen Elektrodenstapels 14 einen Druck 26 mit einer im Wesentlichen konstanten Kraft auf den Elektrodenstapel 14 auszuüben, wobei die Druckkompensationseinrichtung als schlauchartige Luftfeder 22 ausgebildet ist.

Wie in der Fig. 1 gezeigt, weist der elektrische Energiespeicher 10 zumindest einen zweiten Elektrodenstapel 14 auf, und die schlauchartige Luftfeder 22 ist zwischen den beiden Elektrodenstapeln 14 angeordnet. Ferner kann vorgesehen sein, dass die schlauchartige Luftfeder 22 an zumindest dem Elektrodenstapel 14 und/oder an einer Gehäusewand des Gehäuses 12 des elektrischen Energiespeichers 10 abgestützt ist.

Insbesondere ist somit vorgesehen, dass die schlauchartige Luftfeder 22 zur Kompensation von Dickenänderung aus einem dünnen elastischen Kunststoff ausgebildet sein kann und die Radialkraft durch die Umgebung, das heißt auf der Fläche durch die Elektrodenstapel 14 und seitlich durch das ohnehin vorhandene hinreichend stabile Gehäuse 12 abzustützen. Hierbei kann insbesondere von einem Prinzip wie in einem Fahrradschlauch gesprochen werden. Der Aufwand dieser so genannten "Schlauchfeder" ist sehr gering, sodass diese ohne weiteres nach jedem Elektrodenstapel 14 oder jedem Elektrodenpärchen angeordnet werden kann, sodass sich die Elektroden 16 bei Dickenänderungen nicht in der Batterie oder dem Zellblock axial verschieben, wobei deren mechanische, thermische und elektrische Anbindung deutlich vereinfacht wird.

Die elastische Umhüllung der schlauchartigen Luftfeder 22 kann dabei aus Kunststoff oder aus Gummi ausgebildet sein, wodurch keine zusätzliche elektrische Isolation nötig ist. Die Wandstärke des Umhüllungsmaterials liegt dabei beispielsweise bei 0,1 Millimeter beziehungsweise bei 0,3 Millimeter, wodurch sich unabhängig vom Federweg Blocklängen im Bereich von 0,2 bis 0,6 Millimeter ergeben.

Die schlauchartige Luftfeder 22 ist nicht eigenständig betriebsfähig, da die dünne Kunststoffumhüllung ohne externe Abstützung lange vor Erreichen des Betriebsdrucks platzen würde.

Fig. 2 zeigt eine weitere schematische Seitenansicht einer weiteren Ausführungsform des elektrischen Energiespeichers 10. Vorliegend ist insbesondere gezeigt, dass die schlauchartige Luftfeder 22 beziehungsweise deren Wirkbereich nach jedem einzelnen Elektrodenstapel 14 angeordnet werden kann, wodurch der Mittelbereich der Zelle bei der Änderung der Dicke feststeht und die Außenbereiche verschieben sich dabei, oder jeweils nach einem Zellpärchen, wie dies in der Fig. 3 gezeigt ist, die Kontaktstelle der beiden Zellen steht bei der Änderung der Dicke fest und außenliegende Bereiche der beiden Elektrodenstapel 14 verschieben sich. Der feststehende Bereich ist durch das Bezugszeichen 30 als Halteposition gekennzeichnet. Vorzugsweise kann der elektrische Anschluss beziehungsweise Kontakt der Elektrodenstapel 14 im feststehenden Bereich der Elektrodenstapel 14 angeordnet sein, also mittig bei der schlauchartigen Luftfeder 22 nach jedem Elektrodenstapel 14 beziehungsweise nach jedem Zellpärchen am Zellrand, wo die beiden Elektrodenstapel 14 des Pärchens aufeinander liegen.

Fig. 4 zeigt eine weiter schematische Seitenansicht einer Ausführungsform des elektrischen Energiespeichers 10. In der Fig. 4 ist insbesondere gezeigt, dass er elektrische Energiespeicher 10 zumindest einen zweiten Elektrodenstapel 14 und einen dritten Elektrodenstapel 14 aufweist und die schlauchartige Luftfeder 22 mäanderförmig zwischen den Elektrodenstapeln 14 angeordnet ist. Ferner zeigt die Fig. 4, dass die schlauchartige Luftfeder 22 mittels einer außerhalb des Gehäuses 12 ausgebildeten Druckerzeugungseinrichtung 32 der Druckkompensationseinrichtung pneumatisch kontaktiert ist.

Insbesondere bei Dickenänderungen der Vielzahl von in dem elektrischen Energiespeicher 10 oder in einem Zellblock befindlichen Elektrodenstapel 14 werden vorzugsweise durch eine einzige mäanderförmige zwischen den Elektrodenstapeln 14 durchgezogene schlauchartige Luftfeder 22 kompensiert. Die Fig. 5 zeigt insbesondere eine weitere Alternative, bei welcher die schlauchartige Luftfeder 22 umgeschlagen zwischen dem Elektrodenstapel 14 und dem Gehäuse 12 und/oder einem weiteren Elektrodenstapel 14 angeordnet ist. Somit ist eine einzige schlauchartige Luftfeder 22, die von einer Seite her zwischen den Zellen geführt und dann umgeschlagen wird vorgeschlagen, wodurch der Aufwand nochmals deutlich reduziert ist.

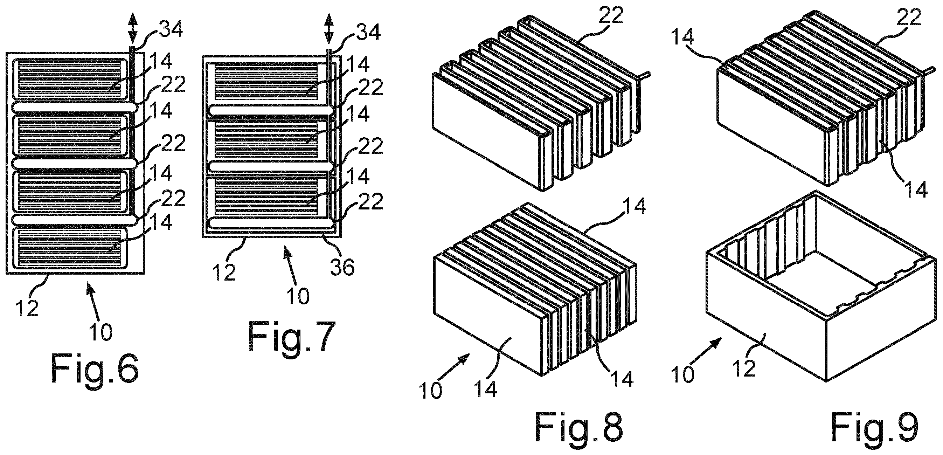

Fig. 6 zeigt eine weitere schematische Seitenansicht einer Ausführungsform des elektrischen Energiespeichers 10. Vorliegend ist insbesondere gezeigt, dass nach jedem Elektrodenstapel 14 oder nach jedem Zellpärchen eine separate schlauchartige Luftfeder 22 angeordnet ist, welche dann beispielsweise über eine entsprechende Verbindungseinrichtung 34 miteinander pneumatisch verbunden sind. Die Verbindungseinrichtung 34 kann beispielsweise als Röhrchen ausgestaltet sein und mit der benachbarten schlauchartigen Luftfeder 22 pneumatisch gekoppelt sein, sodass für jeden Zellblock beziehungsweise für jeden Elektrodenstapel 14 nur ein einziger und zentraler Luftanschluss zur Druckerzeugungseinrichtung 32 notwendig ist. Zur Erleichterung der Montage können die Röhrchen beispielsweise Steckkupplungen aufweisen.

Fig. 7 zeigt eine weitere schematische Seitenansicht einer Ausführungsform des elektrischen Energiespeichers 10. Vorliegend ist insbesondere der Elektrodenstapel 14 als prismatische Zelle 20 dargestellt. Die prismatische Zelle 20 weist ein separates Gehäuse 36 auf. Die schlauchartige Luftfeder 22 ist insbesondere innerhalb des Gehäuses 36 der pneumatischen Zelle 20 ausgebildet. Sollten beispielsweise der Elektrodenstapel 14 eine im Wesentlichen starre Umhüllung, wie dies bei Hardcase-Zellen der Fall ist, aufweisen, so wird die schlauchartige Luftfeder 22 jeweils im Zellinneren angeordnet. Die schlauchartigen Luftfeder 22 werden dann jeweils pneumatisch über die Verbindungseinrichtungen 34 miteinander verbunden, sodass für jeden Zellblock oder für jeden Elektrodenstapel 14 wiederum nur ein einziger und zentraler Luftanschluss nötig ist.

Wie bei einem Fahrrad- oder Autoschlauch können im Betrieb auftretende Defekte/Undichtigkeiten durch das Einbringen einer Latexemulsion, einer so genannten Dichtmilch, über den zentralen Luftanschluss beseitigt werden. Die Dichtmilch tritt dabei teilweise durch das in der schlauchartigen Luftfeder 22 befindliche Loch, härtet aus und verschließt die Undichtigkeit.

Wie bereits erwähnt wird bei Ausdehnung der Elektrodenstapel 14 durch Aufladen oder Alterung Luft aus der schlauchartigen Luftfeder 22 definiert abgelassen und beim Zusammenziehen des Elektrodenstapels 14 durch Entladung der Luft der schlauchartigen Luftfeder 22 aktiv hereingepumpt, so dass sich unabhängig von einer jeweiligen Zelldicke immer dieselbe Druckkraft ergibt, sodass insbesondere eine horizontale Kraft-Weg-Kennlinie ausgebildet ist.

Alle vorstehenden Ausführungen gelten selbstverständlich sinngemäß, wenn anstelle von Luft auch ein anderes Gas oder eine Flüssigkeit verwendet wird.

Fig. 8 zeigt in einer schematischen Explosionsdarstellung eine Ausführungsform des elektrischen Energiespeichers 10 gemäß Fig. 4. Insbesondere ist die mäanderförmige Struktur der schlauchartigen Luftfeder 22 zu erkennen. Im unteren Teil der Fig. 8 ist wiederum der Elektrodenstapel 14 gezeigt. Insbesondere ist vorliegend gezeigt, dass eine Vielzahl von Elektrodenstapeln 14 im elektrischen Energiespeicher 10, vorliegend zehn Elektrodenstapel 14, angeordnet werden können.

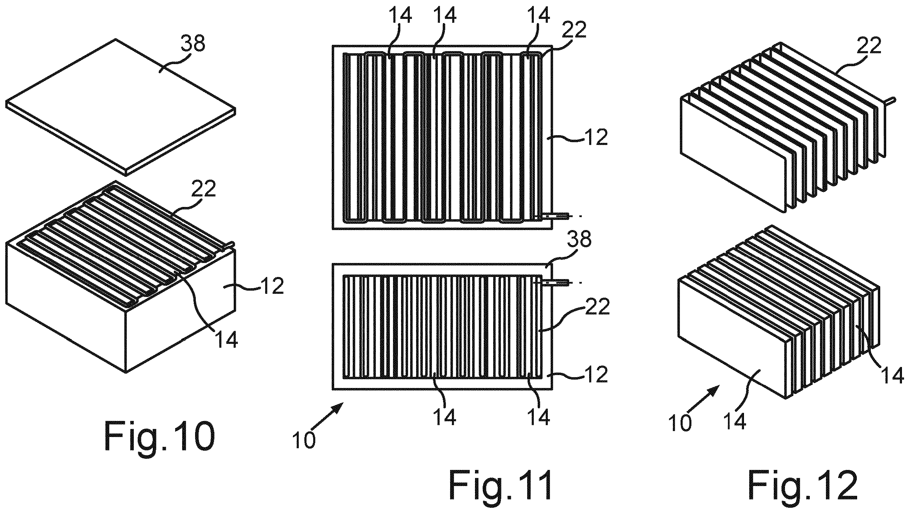

Fig. 9 zeigt eine weitere Explosionsdarstellung einer Ausführungsform des elektrischen Energiespeichers 10 gemäß der Fig. 4 beziehungsweise Fig. 8. Vorliegend ist die schlauchartige Luftfeder 22 im oberen Teil mit den Elektrodenstapeln 14 zusammengebracht. Im unteren Teil wird das Gehäuse 12 des elektrischen Energiespeichers 10 bereitgestellt. Fig. 10 zeigt dann den Zusammenbau aus Fig. 9 mit einem weiteren Deckelelement 38 des Gehäuses 12. Die Fig. 11 zeigt in einem Querschnitt im oberen Teil und in einem Längsschnitt im unteren Teil die Ausführungsform gemäß der Fig. 10 beziehungsweise Fig. 11. Hierbei ist die schlauchartige Luftfeder 22 in Mäanderform gelegt. Die dünnwandige schlauchartige Luftfeder 22 wird allseitig abgestützt. Insbesondere zeigen somit die Fig. 8 bis 11 einen konstruktiven Ausführungsvorschlag des elektrischen Energiespeichers 10 mit einer einzeln mäanderförmig gelegten schlauchartigen Luftfeder 22 an einem Zellblock mit insbesondere vorliegend zehn Elektrodenstapeln 14. Im eingebauten Zustand wird die dünnwandige schlauchartige Luftfeder 22, die flächig auf beide Seiten der Elektrodenstapel 14 drückt, allseitig vom stabilen Gehäuse 12 umgeben und abgestützt.

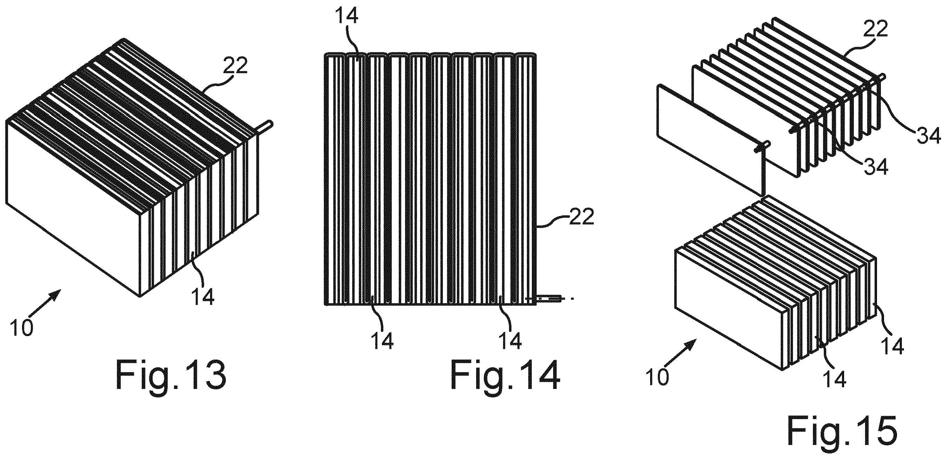

Fig. 12 zeigt eine weitere Explosionsdarstellung einer Ausführungsform der elektrischen Energiespeichers 10, insbesondere gemäß Fig. 5. Im oberen Teil der Fig. 12 ist insbesondere erneut die schlauchartige Luftfeder 22 gezeigt, welche vorliegend als umgeschlagene schlauchartige Luftfeder 22 bereitgestellt ist. Im unteren Teil der Fig. 12 sind erneut zehn Elektrodenstapel 14 gezeigt. Fig. 13 zeigt dann den Zusammenbau aus der schlauchartigen Luftfeder 22 und den zehn Elektrodenstapeln 14 gemäß Fig. 12. In der Fig. 14 ist wiederum eine Schnittansicht gemäß der Fig. 13 gezeigt. Insbesondere zeigen somit die Fig. 12 bis 14 einen weiteren konstruktiven Ausführungsvorschlag für den elektrischen Energiespeicher 10 mit einer einteiligen schlauchartigen Luftfeder 22, welche von einer Seite her zwischen den Elektrodenstapel 14 geführt und umgeschlagen wird.

Fig. 15 zeigt eine weitere schematische Explosionsdarstellung einer Ausführungsform des elektrischen Energiespeichers 10. Insbesondere ist im oberen Teil der Fig. 15 erneut die schlauchartige Luftfeder 22 gezeigt. Insbesondere weist im vorliegenden Ausführungsbeispiel der elektrische Energiespeicher 10 eine Vielzahl von schlauchartigen Luftfedern 22 auf. Diese können insbesondere über jeweilige Verbindungseinrichtungen 34 miteinander gekoppelt werden. Mit anderen Worten ist eine Explosionsdarstellung gemäß Fig. 6 dargestellt. Im unteren Teil der Fig. 15 sind erneut zehn Elektrodenstapel 14 dargestellt.

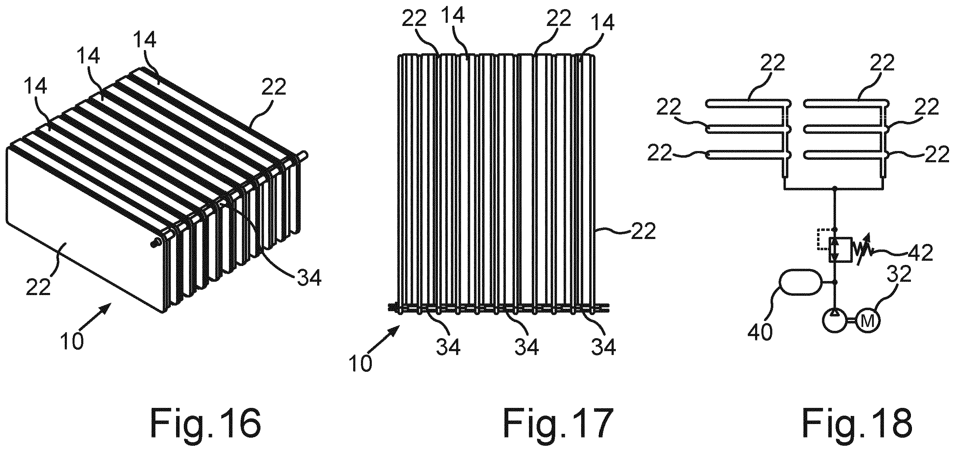

Fig. 16 zeigt dann den zusammengebauten Zustand gemäß Fig. 15. Fig. 17 zeigt wiederum eine Schnittansicht der Fig. 16.

Insbesondere zeigen somit die Fig. 15 bis 17 einen weiteren konstruktiven Ausführungsvorschlag, an welchem die Elektrodenstapel 14 mit zehn Elektrodenstapeln 14 und einer Vielzahl von einzelnen schlauchartigen Luftfedern 22 bereitgestellt werden, welche über die Röhrchen mit beispielsweise Steckkupplungen pneumatisch verbunden sind.

Fig. 18 zeigt ein schematisches Blockschaltbild einer Ausführungsform der Druckkompensationseinrichtung. Vorliegend sind insbesondere mehrere schlauchartige Luftfedern 22 gezeigt. Diese können beispielsweise über ein Druckregelventil 42 mit einer Entlastungsöffnung gekoppelt sein. Ferner kann der elektrische Energiespeicher 10 beziehungsweise die Druckkompensationseinrichtung einen Speicherkessel 40 sowie die Druckerzeugungseinrichtung 32 aufweisen, welche vorliegend insbesondere als elektrisch angetriebener Kompressor ausgebildet sein kann. Insbesondere ist die folgende Fig. 18 für Kraftfahrzeuge gedacht, welche keine Ausstattung für eine Luftfederung aufweisen. Insbesondere zeigt somit die Fig. 18, dass eine Druckluftversorgung der schlauchartigen Luftfeder 22 durch einen elektrisch angetriebenen Kompressor und über ein Regelventil erfolgen kann. Um den nötigen Druck 26 über längere Zeit auch ohne Betrieb des Kompressors aufrechtzuerhalten, kann im pneumatischen System der Speicherkessel 40 ausgebildet sein.

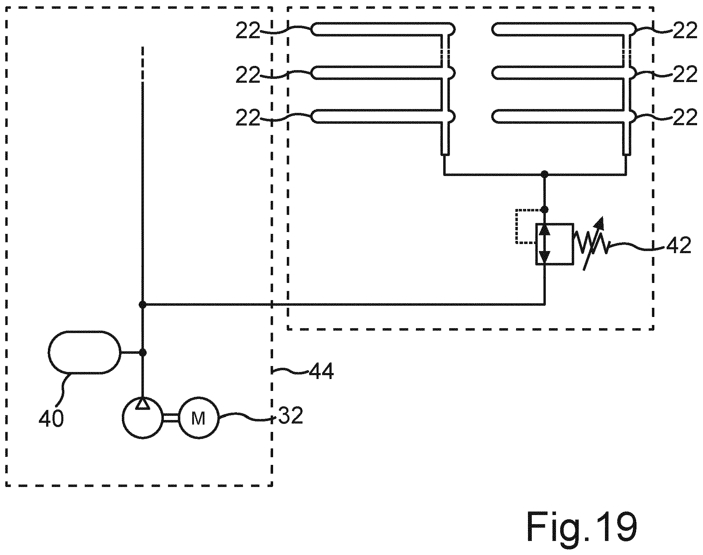

In der Fig. 19 zeigt ein schematisches Blockschaltbild eine Druckkompensationseinrichtung. Insbesondere ist hierbei gezeigt, sollte beispielsweise das Kraftfahrzeug bereits über ein Luftfederungssystem verfügen, dass dieses Luftfederungssystem genutzt werden kann. Der Speicherkessel 40 sowie die Druckerzeugungseinrichtung 32 können dabei als Teil eines Fahrzeug-Luft-Federsystems 44 ausgebildet sein.

Insgesamt zeigt die Erfindung eine Hochvolt-Batterie mit einer pneumatischen Schlauchfeder zur bauraum- und kostenoptimalen aktiven Kompensation von Dickenänderungen bei Elektroden oder Zellen, insbesondere mit Festkörper-Technologie.

## Patentansprüche

1. Elektrischer Energiespeicher (10) mit wenigstens einem Elektrodenstapel (14), welcher eine Mehrzahl von in einer Stapelrichtung (24) übereinander angeordneten Lagen von Elektroden (16) und zwischen den Elektroden (16) angeordneten Separatoren (18) umfasst, mit wenigstens einer Druckkompensationseinrichtung zum Ausüben eines entgegen der Stapelrichtung (24) wirkenden Drucks (26) auf den wenigstens einen Elektrodenstapel (14), wobei der wenigstens eine Elektrodenstapel (14) und die wenigstens eine Druckkompensationseinrichtung in einem Gehäuse (12) des elektrischen Energiespeichers (10) angeordnet sind, wobei der elektrische Energiespeicher (10) eine elektronische Recheneinrichtung (28) zum Ansteuern der wenigstens einen Druckkompensationseinrichtung aufweist, welche dazu ausgebildet ist, in Abhängigkeit von einer jeweiligen Dicke des wenigstens einen Elektrodenstapels (14) einen Druck (26) mit einer im Wesentlichen konstanten Kraft auf den Elektrodenstapel (14) auszuüben, wobei die Druckkompensationseinrichtung als schlauchartige Luftfeder (22) ausgebildet ist,
**dadurch gekennzeichnet, dass**
der elektrische Energiespeicher (10) zumindest einen zweiten Elektrodenstapel (14) und einen dritten Elektrodenstapel (14) aufweist und die schlauchartige Luftfeder (22) mäanderförmig zwischen den Elektrodenstapeln (14) angeordnet ist.

2. Elektrischer Energiespeicher (10) nach Anspruch 1,
**dadurch gekennzeichnet, dass**
die schlauchartige Luftfeder (22) an zumindest dem Elektrodenstapel (14) und/oder an einer Gehäusewand des Gehäuses (12) des elektrischen Energiespeichers (10) abgestützt ist.

3. Elektrischer Energiespeicher (10) nach Anspruch 1 oder 2,
**dadurch gekennzeichnet, dass**
der elektrische Energiespeicher (10) zumindest einen zweiten Elektrodenstapel (14) aufweist und die schlauchartige Luftfeder (22) zwischen den beiden Elektrodenstapeln (14) angeordnet ist.

4. Elektrischer Energiespeicher (10) nach einem der vorhergehenden Ansprüche,
**dadurch gekennzeichnet, dass**
die schlauchartige Luftfeder (22) umgeschlagen zwischen dem Elektrodenstapel (14) und dem Gehäuse (12) und/oder einem weiteren Elektrodenstapel (14) angeordnet ist.

5. Elektrischer Energiespeicher (10) nach einem der vorhergehenden Ansprüche,
**dadurch gekennzeichnet, dass**
die schlauchartige Luftfeder (22) mittels einer außerhalb des Gehäuses (12) ausgebildeten Druckerzeugungseinrichtung (32) der Druckkompensationseinrichtung pneumatisch kontaktiert ist.

6. Elektrischer Energiespeicher (10) nach einem der vorhergehenden Ansprüche,
**dadurch gekennzeichnet, dass**
der Elektrodenstapel (14) als Pouchzelle und/oder als prismatische Zelle (20) ausgebildet ist und/oder die schlauchartige Luftfeder (22) in einem Innenraum der prismatischen Zelle (20) ausgebildet ist.

7. Elektrischer Energiespeicher (10) nach einem der vorhergehenden Ansprüche,
**dadurch gekennzeichnet, dass**
die schlauchartige Luftfeder (22) aus einem elastischen Kunststoff und/oder aus Gummi ausgebildet ist.

8. Elektrischer Energiespeicher (10) nach einem der vorhergehenden Ansprüche,
**dadurch gekennzeichnet, dass**
der elektrische Energiespeicher (10) eine Vielzahl von schlauchartigen Luftfedern (22) aufweist und/oder die Vielzahl von schlauchartigen Luftfedern (22) über eine Verbindungseinrichtung (34) miteinander pneumatisch verbunden ist.

9. Verfahren zum Betreiben eines elektrischen Energiespeichers (10) mit wenigstens einem Elektrodenstapel (14), welcher eine Mehrzahl von in einer Stapelrichtung (24) übereinander angeordneten Lagen von Elektroden (16) und zwischen den Elektroden (16) angeordneten Separatoren (18) umfasst, bei welchem mit wenigstens einer Druckkompensationseinrichtung entgegen der Stapelrichtung (24) wirkenden Druck (26) auf den wenigstens einen Elektrodenstapel (14) ausgeübt wird, wobei der wenigstens eine Elektrodenstapel (14) und die wenigstens eine Druckkompensationseinrichtung in einem Gehäuse (12) des elektrischen Energiespeichers (10) bereitgestellt werden, wobei
der elektrische Energiespeicher (10) eine elektronische Recheneinrichtung (28) aufweist, mittels welcher die wenigstens eine Druckkompensationseinrichtung angesteuert wird hierbei in Abhängigkeit von einer jeweiligen Dicke des wenigstens einen Elektrodenstapels (14) ein Druck (26) mit einer im Wesentlichen konstanten Kraft auf den Elektrodenstapel (14) ausgeübt wird, wobei die Druckkompensationseinrichtung als schlauchartige Luftfeder (22) bereitgestellt wird
**dadurch gekennzeichnet, dass**
der elektrische Energiespeicher (10) mit zumindest einem zweiten Elektrodenstapel (14) und einen dritten Elektrodenstapel (14) bereitgestellt wird und die schlauchartige Luftfeder (22) mäanderförmig zwischen den Elektrodenstapeln (14) angeordnet wird.

## Claims

1. Electrical energy store (10) having at least one electrode stack (14), which comprises a plurality of layers of electrodes (16) arranged one above the other in a stacking direction (24) and separators (18) arranged between the electrodes (16), having at least one pressure compensation device for exerting a pressure (26) acting counter to the stacking direction (24) on the at least one electrode stack (14), the at least one electrode stack (14) and the at least one pressure compensation device being arranged in a housing (12) of the electrical energy store (10), the electrical energy store (10) having an electronic computing device (28) for controlling the at least one pressure compensation device, which is designed to exert a pressure (26) with a substantially constant force on the electrode stack (14) depending on a particular thickness of the at least one electrode stack (14), the pressure compensation device being designed as a hose-like air spring (22), **characterized in that**
the electrical energy store (10) has at least a second electrode stack (14) and a third electrode stack (14) and the hose-like air spring (22) is arranged in a meandering manner between the electrode stacks (14).

2. Electrical energy store (10) according to claim 1,
**characterized in that**
the hose-like air spring (22) is supported on at least the electrode stack (14) and/or on a housing wall of the housing (12) of the electrical energy store (10).

3. Electrical energy store (10) according to claim 1 or 2,
**characterized in that**
the electrical energy store (10) has at least a second electrode stack (14) and the hose-like air spring (22) is arranged between the two electrode stacks (14).

4. Electrical energy store (10) according to any of the preceding claims,
**characterized in that**
the hose-like air spring (22) is arranged folded over between the electrode stack (14) and the housing (12) and/or a further electrode stack (14).

5. Electrical energy store (10) according to any of the preceding claims,
**characterized in that**
the hose-like air spring (22) is pneumatically contacted by means of a pressure generating device (32), formed outside the housing (12), of the pressure compensation device.

6. Electrical energy store (10) according to any of the preceding claims,
**characterized in that**
the electrode stack (14) is designed as a pouch cell and/or as a prismatic cell (20) and/or the hose-like air spring (22) is formed in an interior of the prismatic cell (20).

7. Electrical energy store (10) according to any of the preceding claims,
**characterized in that**
the hose-like air spring (22) is made of a resilient plastics material and/or rubber.

8. Electrical energy store (10) according to any of the preceding claims,
**characterized in that**
the electrical energy store (10) has a plurality of hose-like air springs (22) and/or the plurality of hose-like air springs (22) are pneumatically connected to one another via a connecting device (34).

9. Method for operating an electrical energy store (10) having at least one electrode stack (14), which comprises a plurality of layers of electrodes (16) arranged one above the other in a stacking direction (24) and separators (18) arranged between the electrodes (16), in which method a pressure (26) acting counter to the stacking direction (24) is exerted on the at least one electrode stack (14) by means of at least one pressure compensation device, the at least one electrode stack (14) and the at least one pressure compensation device being provided in a housing (12) of the electrical energy store (10),
the electrical energy store (10) having an electronic computing device (28) by means of which the at least one pressure compensation device is controlled, whereby a pressure (26) with a substantially constant force is exerted on the electrode stack (14) depending on a particular thickness of the at least one electrode stack (14), the pressure compensation device being provided as a hose-like air spring (22)
**characterized in that**
the electrical energy store (10) is provided with at least a second electrode stack (14) and a third electrode stack (14) and the hose-like air spring (22) is arranged in a meandering manner between the electrode stacks (14).

## Revendications

1. Accumulateur d'énergie électrique (10) comportant au moins un empilement d'électrodes (14), qui comprend une pluralité de couches d'électrodes (16) agencées les unes au-dessus des autres dans une direction d'empilement (24) et des séparateurs (18) agencés entre les électrodes (16), comportant au moins un dispositif de compensation de pression pour exercer une pression (26) agissant à l'encontre de la direction d'empilement (24) sur l'au moins un empilement d'électrodes (14), dans lequel l'au moins un empilement d'électrodes (14) et l'au moins un dispositif de compensation de pression sont agencés dans un boîtier (12) de l'accumulateur d'énergie électrique (10), dans lequel l'accumulateur d'énergie électrique (10) présente un dispositif de calcul électronique (28) pour commander l'au moins un dispositif de compensation de pression, lequel est conçu pour exercer une pression (26) avec une force sensiblement constante sur l'empilement d'électrodes (14) en fonction d'une épaisseur respective de l'au moins un empilement d'électrodes (14), dans lequel le dispositif de compensation de pression est conçu comme un ressort pneumatique (22) en forme de tuyau,
**caractérisé en ce que**
l'accumulateur d'énergie électrique (10) présente au moins un deuxième empilement d'électrodes (14) et un troisième empilement d'électrodes (14) et le ressort pneumatique (22) en forme de tuyau est agencé en méandres entre les empilements d'électrodes (14).

2. Accumulateur d'énergie électrique (10) selon la revendication 1,
**caractérisé en ce que**
le ressort pneumatique (22) en forme de tuyau s'appuie sur au moins l'empilement d'électrodes (14) et/ou sur une paroi de boîtier du boîtier (12) de l'accumulateur d'énergie électrique (10).

3. Accumulateur d'énergie électrique (10) selon la revendication 1 ou 2,
**caractérisé en ce que**
l'accumulateur d'énergie électrique (10) présente au moins un deuxième empilement d'électrodes (14) et le ressort pneumatique (22) en forme de tuyau est agencé entre les deux empilements d'électrodes (14).

4. Accumulateur d'énergie électrique (10) selon l'une des revendications précédentes,
**caractérisé en ce que**
le ressort pneumatique (22) en forme de tuyau est agencé en étant rabattu entre l'empilement d'électrodes (14) et le boîtier (12) et/ou un autre empilement d'électrodes (14).

5. Accumulateur d'énergie électrique (10) selon l'une des revendications précédentes,
**caractérisé en ce que**
le ressort pneumatique (22) en forme de tuyau est mis en contact pneumatique au moyen d'un dispositif de génération de pression (32) du dispositif de compensation de pression, conçu à l'extérieur du boîtier (12).

6. Accumulateur d'énergie électrique (10) selon l'une des revendications précédentes,
**caractérisé en ce que**
l'empilement d'électrodes (14) est conçu sous la forme d'une cellule de poche et/ou d'une cellule prismatique (20) et/ou le ressort pneumatique (22) en forme de tuyau est conçu dans un espace intérieur de la cellule prismatique (20).

7. Accumulateur d'énergie électrique (10) selon l'une des revendications précédentes,
**caractérisé en ce que**
le ressort pneumatique (22) en forme de tuyau est conçu en une matière plastique élastique et/ou en caoutchouc.

8. Accumulateur d'énergie électrique (10) selon l'une des revendications précédentes,
**caractérisé en ce que**
l'accumulateur d'énergie électrique (10) présente une pluralité de ressorts pneumatiques (22) en forme de tuyau et/ou la pluralité de ressorts pneumatiques (22) en forme de tuyau est reliée pneumatiquement par l'intermédiaire d'un dispositif de liaison (34).

9. Procédé permettant de faire fonctionner un accumulateur d'énergie électrique (10) comportant au moins un empilement d'électrodes (14), qui comprend une pluralité de couches d'électrodes (16) agencées les unes au-dessus des autres dans une direction d'empilement (24) et des séparateurs (18) agencés entre les électrodes (16), dans lequel une pression (26) agissant à l'encontre de la direction d'empilement (24) est exercée sur l'au moins un empilement d'électrodes (14) au moyen d'au moins un dispositif de compensation de pression, dans lequel l'au moins un empilement d'électrodes (14) et l'au moins un dispositif de compensation de pression sont mis à disposition dans un boîtier (12) de l'accumulateur d'énergie électrique (10), dans lequel
l'accumulateur d'énergie électrique (10) présente un dispositif de calcul électronique (28) au moyen duquel l'au moins un dispositif de compensation de pression est commandé ici, en fonction d'une épaisseur respective de l'au moins un empilement d'électrodes (14), une pression (26) est exercée avec une force sensiblement constante sur l'empilement d'électrodes (14), dans lequel le dispositif de compensation de pression est mis à disposition sous forme de ressort pneumatique (22) en forme de tuyau
**caractérisé en ce que**
l'accumulateur d'énergie électrique (10) est mis à disposition avec au moins un deuxième empilement d'électrodes (14) et un troisième empilement d'électrodes (14) et le ressort pneumatique (22) en forme de tuyau est agencé en méandres entre les empilements d'électrodes (14).
